# EUROPEAN PATENT SPECIFICATION

(11) **EP 2 464 710 B1**
(45) Date of publication and mention of the grant of the patent: **23.01.2019**
(21) Application number: 10760796.2
(22) Date of filing: 11.08.2010
(51) Int. Cl.: C09K 11/77, C09K 11/88, G06K 7/10

(54) **MARKERS FOR PROTECTION VALUABLE LIQUID AND SOLID MATERIALS**
MARKIERUNGEN ZUM SCHUTZ VON FLÜSSIGEN UND FESTEN MATERIALIEN
MARQUEURS POUR LA PROTECTION DES MATERIAUX LIQUIDES ET SOLIDES

(30) Priority: 11.08.2009 PL 38878009
(43) Date of publication of application: 20.06.2012
(73) Proprietor: UNIVECT Sp. z o.o., 50-315 Wroclaw (PL)
(72) Inventor: STREK, Wieslaw, 54-600 Bielany Wroclawskie (PL); NYK, Marcin, 42-700 Lubliniec (PL); BEDNARKIEWICZ, Artur, 51-684 Wroclaw (PL)
(74) Representative: Gizinska-Schohe, Malgorzata
(86) International application number: PCT/PL2010/050047
(87) International publication number: WO 2011/019293

(56) References cited:
- US-A1- 2007 251 996
- US-A1- 2008 159 657
- US-A1- 2009 042 314
- WON JIIN KIM, ET AL.: "Color-coded multilayer photopatterned microstructures using lanthanide (III) ion co-doped NaYF4 nanoparticles with upconversion luminescence for possible applications in security", NANOTECHNOLOGY, vol. 20, 185301, 14 April 2009 (2009-04-14), page 1-7, XP002611392,

## Description

The subject of the invention is a marker that is applicable in the protection of valuable objects (liquids like car fuel, spare mechanical parts like critical elements of car engines, banknotes or coins, documents like certificates, plastics like printer cartridges), against unauthorised substitution with second-hand / forged objects. The subject of the invention should therefore allow embedding the certificate of originality as a "fingerprint" into the object itself. By verification of this certificate *in situ,* any device using the object (printer cartridge, fuel, coins or mechanical spare parts) would be allowed to run or not. This in turn should prevent reversed engineering, cloning of spare parts or malfunctioning of the devices due to the use of interchangeables of bad/improper/non-original quality.

There are known ways of marking valuable solid materials (paper, plastic, documents, banknotes) to secure their authenticity with nanocrystalline powders (e.g.. U.S. Patent No. 7.198.847). US Patent 2005/0099475 A1 describes dye which is invisible in the visible light and exhibits fluorescence under UV excitation. US Patent 2005/0079628 describes a method and device to identify and distinguish multi-component mixture and a way of identification of its composition by direct comparison with a standard sample of known composition. Spectral analysis allows obtaining spectra of characteristic shapes (multi-dimensional stamp) that represents a set of total spectral intensity distribution. Comparison of different spectral shapes by comparing the respective intensities assigned to specific wavelength provides reliable identification and comparing whether the test sample contains a signature or not. However, the Patent refers to the studies of inherent spectral properties (autofluorescence) of the substances and pollutants present in it. US Patent 2005/0079628 does not refer to intentionally introduced nanomarkers that were designed and synthesized with chemical engineering method. US Patent 0079628 2005, doesn't apply for marking of valuable objects. US Patent 3.473.027 claims the use of organic and inorganic compounds doped with rare-earths, that are distinguishable in the visible and IR spectral region, to label different kinds of objects. Spectral detector allows distinguishing between narrow spectral luminescence coming from different rare earth ions. US Patent 3.412.245 adds luminescence decay time as coding/securing method. Since the luminescence decay time of the lanthanides is in the micro-millisecond range, it is possible to distinguish the marker's luminescence from short-living luminescence of the organic dyes contained in the sample. US Patents 3.582.623 and US 3.663.813 further develop spectral measuring apparatus with measurements of luminescence properties of the markers. Patent 3.650.400 describes application of pulse light sources and synchronic detection (principle of "lock-in" detection) to eliminate the luminescence background. US Patent 4.047.033 describes a method, device and luminescent material using upconversion phenomenon (UPC) in rare earths compounds. The detection is performed under continuous or pulsed GaAs IR-emitting LED excitation at 950 nm by spectral identification of the obtained luminescence spectra. This method is indeed vulnerable to the variability of luminescence intensity (susceptible to e.g. intensity, type/transparency test sample, ageing, getting dirty, etc.) and therefore its application is limited. In addition, the number of unique codes possible to implement is also limited. The next method assumes also use of luminescence lifetimes of the lanthanides as a parameter that is specific for that material. In the existing form, the patent claims are limited to phosphorescence with the decay times not less than 50 ms. The patent US 2004/0031931 propose a method, device and authentication protection system. Rather than comparing individual luminescence intensity measurements as proposed in the previously mentioned patents, normalized luminescence intensity and spectral shapes are compared, which are characteristic for a given material. Claimed are any materials containing rare earth ions, showing the Stokes or anti-Stokes emission under the excitation in the X-ray/UV-vis-IR, showing luminescence rise times or decay times (in the microsecond to seconds range) under pulsed irradiation. Spectral analysis based on time-resolved spectral measurements as compared to standard samples is claimed as a method of detection and authentication. In theory, this patent is very general in its nature and cover most of the cases. However our approach suggest a mixture of luminescent materials giving a chance to increase number of unique optical codes. US Patent 6.966.998 B1 propose admixtures onto or into a document (banknote, glass matrix) to authenticate the document in a visible light. Detection is based on measuring the absorbance spectrum in transmission or reflection mode. Admixtures of color pigments can be single, homogeneous mixtures distributed in material from which the document is created or printed as spatial design (bar code). This method uses inherent spectral properties of the phosphors and thus does not use mixtures of different luminescent nanocrystallites in different proportions to design and create unique spectral "fingerprints". US Patent 2005/0178841 A1 shows a system and method for authenticating products and documents. The system assumes the use of one or more colours (e.g. lanthanide chelates), of which at least one is not visible to the unaided eye or is luminescent. The patent assumes the use of both spectral and spatial coding. The spectral coding is obtained with potentially large library of (discrete or spectrally overlapping) colours (lanthanide chelates) with different spectral properties (luminescence colours/shapes/decays). The simultaneous spatial coding is achieved with encoding through the spatial information (e.g. changes of size or shapes) of printed patterns. Identification is conducted by measuring the presence of several colors/tags only in a qualitative manner. The patent 2005/0178841 A1 does not claim homogeneous mixture (powder/suspension) of different nanoluminophors which would otherwise result in a reduced and varying resistance to ageing for different colors and a simplified method of defining/synthesis and detection of the optical detection code. In addition, the actual patent proposal assumes the use of mixed materials showing (depending on the composition) both anti-Stokes and Stokes emission, and excitation spectrum that are highly specific for the phosphors used. Furthermore, this mixture has a fixed proportion of ingredients, which allows not only to determine presence but also to establish the relative concentration of individual tags in order to identify the optical code. In order to protect the liquid fuels, in US patent 5525516 infrared dyes (squaric acid derivatives, ftalocyanines and naftoftalocyanines) have been proposed, that may be excited in the 670-850 nm range and observed in the IR (>800nm). After admixing the dyes (very low concentrations in ppm-parts per million range) to the fuel, fluorescence is detected for the identification of the dye used and further identification of the producer, purity or any other characteristic. By the biochemical modification of the dye molecules, different fluorescence spectra may be obtained and thus it is possible to include several different colours in one sample. The disadvantage of organic dyes is their photo- and chemical- instability and broad emission bands that reduce the complexity and number of the optical codes. In the US patent 4053433 microspheres containing simultaneously many dyes (which form a unique color) were proposed as the coding tags. A single microsphere with a defined composition and mixture of many different dyes in known proportions is regarded as a single complete code. This approach brings many problems with the synthesis of microspheres with different color codes, since each code requires different protocol of synthesis. In addition, the dyes proposed in the patent are susceptible to photochemical degradation and ageing to much higher extend then the nanoluminophores proposed to be used here. In the US patent 6576155 functionalized nanoparticles (semiconductive quantum dots) as well as their mixtures in water or other solvents have been proposed to be used as unique optical codes. Detection relies on the measurement of relative intensity of subbands from emission spectrum (major/dominant color in the 410-750nm range) under UV excitation (300-400 nm). Beside some similarities, the actual patent have some critical improvements to the US patent 6576155 claims. In the case of US patent 6576155, the detection relies only on color code created by a few basic colors in different proportions (e.g. mixed red, green and blue colours). Measurement of the relative intensity of the fluorescence of these three components define color code. In our case, apart from color coding, higher specificity and sophistication of the encoding is possible by measuring the subtle spectral features (be measuring excitation spectra, luminescence spectra and luminescence decay times). This makes indeed very difficult to counterfeit the optical code.

The document US 2009/0042314 describes lanthanide-doped NaYF4 nanocrystals for identifying or authentification of products.

Taking into account the existing solutions, high demand exists for materials and methods of marking and identification of documents, that allows to:, easily synthesize and equivocally sense numerous unique optical codes, deliver the nanomarker onto a surface (e.g. print) or into the volume (e.g. admix to a paper, liquid, plastic etc.) of an branded/protected object, exploit luminescence/phosphorescence markers which demonstrate a high resistance to photo-chemical degradation and loss of spectral properties (e.g.photobleaching), preserve the inherent properties/functions of the materials/objects to be marked. Unexpectedly, The subject of the independent claim 1 achieves this object. Object of the invention is the use of a marker for protection valuable liquid and solid materials as defined in claim 1. Further favourable objects are defined in claims 2-5. It is advantageous if nanoluminophores show both absorption and luminescent properties in the optical range (200-2000 nm). Nanoluminophores do not react chemically with chemical substances in the place they reside in, and do not create agglomerates between themselves. The marker composed of a mixture of *nanoluminophores* is homogeneous, i.e.individual *nanoluminophores* are statistically evenly dispersed in matrix (liquids or solids). High uniformity of the marker (*nanoluminophores* mixture) makes it possible to acquire absorption, excitation and/or luminescence spectra measurements using identical measurement setup as for a single tag and is recorded by the measurement system as a single tag exhibiting complex optical properties. As *nanoluminophores* nanocrystallites of sizes between a few to a few tens of nanometers are used . The nanocrystallites may be metals exhibiting plasmonic bands (Au, Ag, Pt, Rh, Re, Pd, Cu), semiconductors (CdSe, PbS, ZnO, GaN) or nanocrystallites doped with lanthanides (Ce-cerium, PR-praseodymium, Nd-neodymium, EU-europium, Gd-gadolinium, Tb-terbium, Sm-samar, Tm-thulium, Er-erbium, Yb-ytterbium) or transitional metals (Cr-chromium, co-cobalt, Mn-manganese, Ru-ruthenium, Ni-nickel).. From among many compounds doped with rare-earth and transitional metals, nanocrystalline metal oxides -A₂O₃, -granates-A₃B₅O₁₂, perovskites-ABO₃, spinels-AB₂O₄ or stoichiometric compounds with large concentrations of optically active ions, namely fluorides or oxychlorides. A mixture of nanocrystalline phosphors is later named *nanomarker* or *nanotag.* Nanomarker consists of at least two different nanoluminophores. This approach allows one to easily tune optical / spectral properties during the preparation stage of the nanotag by simply mixing the nanoluminophores in a fixed relative amounts. The nanotags beeing a mixture of the nanoluminophores demonstrate a presence of characteristic absorption, excitation and luminescent bands in UV, visible and infrared region. The overall spectral properties of the nanomarker result from the mixed spectral properties of the independent nanoluminophores. The aim of the invention is also to develop such a manufacturing method of the nanoluminophores and the nanotags to allow for a unique coding and marking any type of materials. The coding relays on admixing the nanotags to the materials composition. The reading relays on the measurement of the spectral features (i.e. sbsorption, excitation, luminescence spectra and/or luminescence decay times) of these tags. In the contrast to a mixture of optically active ions themselves, application of a mixture of nanoluminophores forming nanotags, limits the impact of optical interaction between active ions and between doped nanocrystallites. This allows to easily designing nanotags with unique spectral properties. These nanoparticles are devoid of the drawbacks inherent to other optical nanoprobes, namely the broad emission and non-photostability of organic dyes as well as heavy-metal toxicity associated with quantum dots/rods (used for bioapplications). Moreover, for multiplexed bioimaging studies, which are of special interest currently in the optoelectronic and biological field, a population of nanophosphors with different emission spectra can be simultaneously excited with a single wavelength.

Based on their energy (or wavelength) of excitation and emission, nanophosphors can be broadly classified into two types: downconverting, which show Stokes emission (i.e. with emission in longer wavelength spectral range comparing to excitation; Lambda ex <Lambda em), and 'upconverting', manifesting anti-Stokes emission (Lambda ex >Lambda em). Because of existence of metastable intermediate energy level in RE³⁺ ions doped into nanophosphors, an upconversion process involves the sequential absorption of two photons, as opposed to simultaneous absorption in case of two-photon excitation where the intermediate level is virtual. This makes upconverting process much more efficient in comparison to two-photon absorption and allows excitation and imaging of unconverting nanophosphors using low-power and inexpensive continuous wave (CW) laser diodes, which are readily available.

The present invention provides also a method for the preparation of nanoprobes based on nanophosphor materials co-doped with rare-earth metal ions with downconverting or upconverting optical properties. These nanophosphor materials are synthesized in non-aqueous phase by a wet chemical method so in order to furhter use these nanoparticles for a many applications; their surface has been modified with mercapto salts to obtain water dispersible nanoprobes. The present invention further describes the successful use of these materials as "nano-ink" for printing security documents and holograms.
In general the nanoluminophores themselves, the methods of their preparation and methods how to verify their properties are known. However, what we propose is to exploit their unique properties to create many unique optical codes to protect valuable objects and materials. Therefore we cannot say anything about new properties of the nanoluminophores themselves, but about a new way to exploit these properties.

### DRAWINGS

Exemplary embodiments of the invention are illustrated in the drawings and explained in more detail in the following description.
Fig E1.1. shows, casic optical encoding scheme using three different nanoluminophores mixed in different relative proportions in order to obtain a homogeneous material/solution suitable to mark substances. By changing the ratio of the nanocrystallies' concentration A:B:C changes of luminescence spectra and colour of a homogeneous mixture of markers is observed. The hue is coded by three constituent RGB (from. Red Green Blue). However the nanoluminophores proposed by us, beside colour (qualitative feature) exhibit also many subtle optical features that make them suitable for quantitative comparison.
Fig E1.2. shows, absorption spectra of colloidal solutions of NaYF₄ nanocrystallites doped with Er³⁺, Yb³⁺ (a), Nd³⁺ (b), Er³⁺(c) and Tm³⁺, Yb³⁺ (d) dissolved in chloroform
Fig E1.3. shows, luminescence spectra of colloidal solutions of NaYF₄ nanocrystallites doped with Er³⁺ and Yb³⁺ (a), Tm³⁺ and Yb³⁺ (b), Nd³⁺ (c) and Eu³⁺ (d) dissolved in chloroform.
Fig. E1.4. shows, the representative TEM images of nanocrystallites a) NaYF₄ doped with Eu³⁺ ions and (b) nanocrystallites of CdSe quantum dots (see example).
Fig. E6.1. shows, the luminescencje spectrum of NaYF₄ nanocrystals doped with 2% Tm³⁺, 20% of the Yb³⁺ - nanoluminophor (A) and 2% with Er³⁺, 20% of the Yb³⁺-nanoluminophor (B) dissolved in chloroform in the concentrtation ratio [A]/[B] = 1. Appropriate bands are assigned to the appropriate nanoluminophores.
Fig. E6.2. shows, the luminescence spectrum of NaYF₄ nanocrystals doped with 2% Tm³⁺, 20% of the Yb³⁺-nanoluminophor (A) and with 2% Er³⁺, 20% of the Yb³⁺-nanoluminophor (B) dissolved in chloroform in the volume concentration ratio [A]/[B]equal to 8/10, 7/10 and 6/10. Appropriate bands are assigned to the appropriate nanoluminophores.
Fig. E7. shows, the luminescencje spectrum of NaYF₄ nanocrystals doped with 5% Eu³⁺ - nanoluminophor (A) and 2% Er³⁺, 20% of the Yb³⁺-nanoluminophor (B) dissolved in chloroform in the volume concentration ratio [A]/[B] = 1. Appropriate bands are assigned to the appropriate nanoluminophores.
Fig. E8. shows, an example of the impact of relative lanthanide ion concentration (Er³⁺ : Yb³⁺) in the same host matrix on the proportions of emission bands
Fig. E9. shows, absorption and luminescence spectrum of CdSe quantum dots dissolved in chloroform.
Fig. E10., shows, absorption spectrum of a mixture composing of solutions: chloroform with NaYF₄ nanocrystallites doped with Yb³⁺ (A) and pure gasoline (B). The volume ratio between gasoline and nanotag was 1 to 5.

### DESCRIPTION OF THE EXEMPLARY EMBODIMENTS

### Example 1

Fig. E.1 shows example of a simplified optical encoding scheme using a mixture of three different nanocrystallites mixed in different relative proportions in order to obtain a homogeneous material/solution ready for marking the substances/objects. By changing the aspect ratio A:B:C of the concentration of the nanocrystallites, changes in luminescence spectra and in color of a homogeneous mixture of markers are observed. In fact, the use of different matrix (host material) for active ions, leads to changes in subtle spectral features like shape of the absorption/emissions spectra as well as luminescence lifetimes.

The properties of a given set of nanotags are established by measuring the absorption and/or luminescence properties. The absorption is measured as the absorption spectrum, i.e. the absorption of light at a given wavelength in the UV/VIS/NIR spectral region. In the simplest case the absorption properties may be measured as the absorption at single wavelength in reference to the absorption at the wavelength region where the sample/tag do not absorb the light.
The luminescence properties are measured be acquiring luminescence spectra, i.e. the intensity of luminescence at a given wavelength under a defined excitation line. In the simples case the luminescence intensities of minimum two emission bands (at two different emission wavelengths) are measured and related to each other. In the most complex case, the whole luminescence spectra are measured and individual emission bands are compared to calibration emission spectra of individual luminophores. Lets assume a set of N phosphors is used for optical coding. Favourably, the properties of the set of marking nanoluminophores is described by a unit vector [A₁,A₂,...,A_{N}] where Aᵢ = Sᵢ/ ∑ⱼ₌₁,...,_{N}Sⱼ is the integrated area of a given luminescence band Sᵢ and normalized to total integrated luminescence of all the nanoluminophores j=1..N (i.e. A₁+A₂+....+A_{N}=1). The intensity of each of the luminescence bands is characterised by its intensity measured as the integral area of the band or may be characterised by measuring the peak intensity in relation to the background signal.

The present invention exploits luminescence spectra of the nanotags to detect inherent spectral properties and identify the composition of the nanotags. The nanotags are excited homogeneously with ultra-violet, visible radiation or infra-red radiation (e.g. light laser) to observe converted radiation (e.g. due to up-conversion or Stokes luminescence). The intensity of luminescence of the nanotags does not dependent on the contents of other fluorescent admixtures. The detection by using the proposed invention relies only on the relative concentration of individual nanoluminophores. A combination of N phosphors used, each of which contains at least one band of intensity M allows to obtain K = M^{N}-1 unique unit vectors. For example a three luminescence bands coming from three nanoluminophores of luminescence intensities of 10 units gives 10³-1 = 999 different vectors, each of which is associated with the specified information (spectral code). If one extends the set to five nanoluminophores, the total number of available unit vectors reaches 100,000.

Example optical features of the individual nanoluminophores used to prepare tags are presented in the Figure E.1.2 (absorption spectra) and Figure E.1.3 (luminescence spectra). The nanoluminophores were a homogenous colloidal solution of NaYF₄ nanocrystals dispersed in chloroform. Spectral properties of the nanoluminophores' mixture (i.e. of the nanotag, like presented in Fig.E.1.1) is showing a sum of spectral properties of the individual nanoluminophores - the components of the nanotag. This is because the active ions, i.e. ions responsible for absorption/luminescence, do not interact with each other as it would be the case if they doped the same host. This allows designing nanotags exhibiting desirable spectral properties.

### Example 2

*Method I.* of synthesis of NaYF₄:2%Tm³⁺, 20%Yb³⁺. In a typical synthesis fixed amounts of commercial Tm₂O₃, Yb₂O₃ and Y₂O₃ were mixed and solubilized in 50 % concentrated trifluoroacetic acid at 80°C and slowly evaporated to dryness in vacuum oven at 70°C. The molar compositions of the feed external solution were [Tm/(Tm+Yb+Y)] = 0.02 and [Yb/(Tm+Yb+Y)] = 0.2. Next, the obtained trifluoroacetate precursor salt was added to a three-necked flask containig 30 ml octadecane, 30 ml oleic acid and 4.5 mmol of sodium trifluoroacetate. The molar ratio of Na(CF3COO) to RE(CF3COO) was kept 1.8 to form the pure cubic phase of α-NaREF4. The solution was heated to 110°C under vacuum with stirring for 30 min. To remove water and oxygen, the flask was purged with dry nitrogen at 10 min. intervals. The yellow solution was then heated to 300 °C under nitrogen and vigorous stirring for 1 h. The mixture was cooled to room temperature and precipitated by acetone in an ultrasonic bath and collected by centrifugation at 11,000 rpm for 30 min. The precipitate was washed with ethanol and the nanocrystals were dispersed in 5 ml chloroform.

### Example 3

*Method II* of synthesis of NaYF₄:2%Er³⁺, 20%Yb³⁺. In a typical hydrothermal synthesis microwaves were used as stimulators and accelerators of the conversion of corresponding rare earths oxides (Sigma Aldrich) into LnCl₃. 0.3 mmol of an oxide (Yb₂O₃, Er₂O₃ and Y₂O₃) and 10 ml HCl (30 %) were placed into a Teflon vessel and 1 ml of deionized water was added. The prepared solution was placed in the microwave reactor (ERTEC MV 02-02). After hydrothermal processing at 300 °C, under pressure lower than 20 atm. solution of corresponding chloride LnCl₃ was obtained and the precursor was carefully dried in an oven, temperature gradually increasing from 70 to 130 °C. Then, NaOH (1.2 g, 30 mmol), water (10 mL), ethanol (10 mL), and oleic acid (20 mL) were vigorously mixed under magnetic stirring to form a homogeneous solution and after 10 min 1.2 mL aqueous solution of LnCl₃ (0.6 mmol) was added. A solution of 1.0 M NaF in 4 mL of water was added dropwise to the above solution under mixing. Next, the prepared solution was moved into a 50 mL Teflon vessel and the reaction mixture was heated to 180 °C for 7.5 hrs by 100 W of microwave radiation. The pressure was monitored and kept at 10 atm. The nanocrystals were collected by addition of excess cyclohexane and centrifugation when the reaction mixture was cooled to room temperature. The precipitate was washed with ethanol and the nanocrystals were dispersed in 5 mL chloroform.

### Example 4

Method of synthesis of CdSe quantum dots. In a typical synthesis a selenium precursor was made by mixing 0.4 g of selenium powder (95 %, Sigma Aldrich) and 10 g TOP (trioctylphosphine, Sigma Aldrich) in a drybox under an inert atmosphere. Separately, 20 g TOPO (90 % trioctylphosphine oxide, Sigma Aldrich) and 0.25 g of cadmium acetate (Sigma Aldrich) were added to a three-necked flask. The cadmium salt was heated to 110 °C under vacuum with stirring for ∼ 30 min. To remove water and oxygen, the flask was purged with dry nitrogen at 10 min intervals. The transparent solution was then heated to 330 °C under nitrogen and vigorous stirring. At this temperature the selenium stock solution was swiftly injected into the reaction vessel in a single step. The reaction was stopped 1 min after the injection by pouring the flask contents into a cold ethanol solution. The mixture was precipitated by methanol in ultrasonic bath and collected by centrifugation at 4000 rpm for 30 min. The precipitate was dried under vacuum and dispersed in chloroform.

### Example 5

For transferring the nanocrystals from chloroform solution to aqueous phase we used the ligand exchange method. In a typical protocol 2 ml of chloroform dispersion of nanocrytals was further diluted with 3 ml of chloroform and incubated with 5ml of 3-mercapto propionic acid. After the solution was stirred overnight 5ml of HPLC grade water was added to it and further stirred for 30 min. the turbid solution obtained was centrifuged and the pellet was redispersed in 5ml of HPLC grade water by sonication. Finally the aqueous dispersion of the nanocrytals was filtered with a 0.45µm syringe filter and stored at 4 °C for future use.

### Example 6

An example of nanotags composed of two different nanoluminophores. Each of the nanoluminophores were composed of the nanocrystallites (here NaYF₄ host) containing either 2% Tm³⁺: 20% Yb³⁺ or 2% Er³⁺:20% Yb³⁺ (fig. E6.1). Combination of these two nanoluminophores is 1:1 volume concentration ratio showed double up-conversion. Distinct spectral features and subtle spectra shapes allowed to assure the uniqness of the optical code.

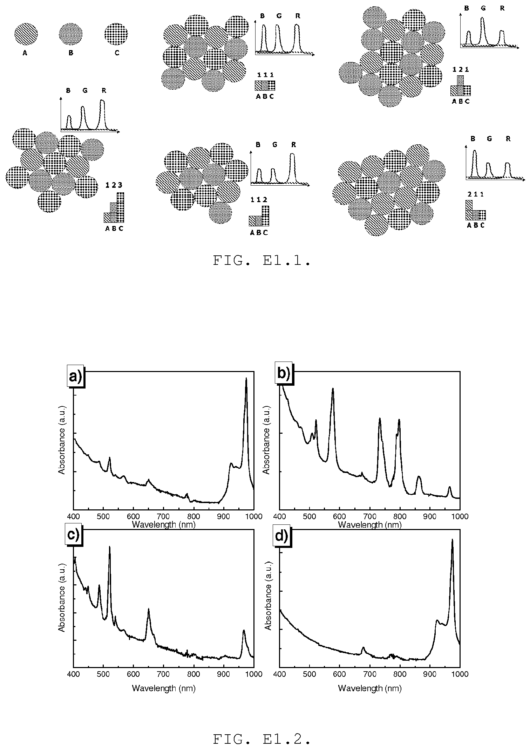

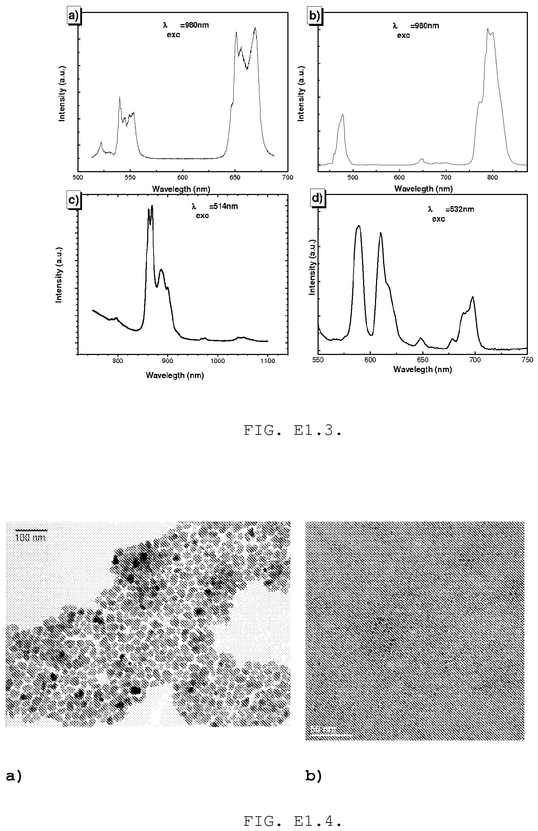

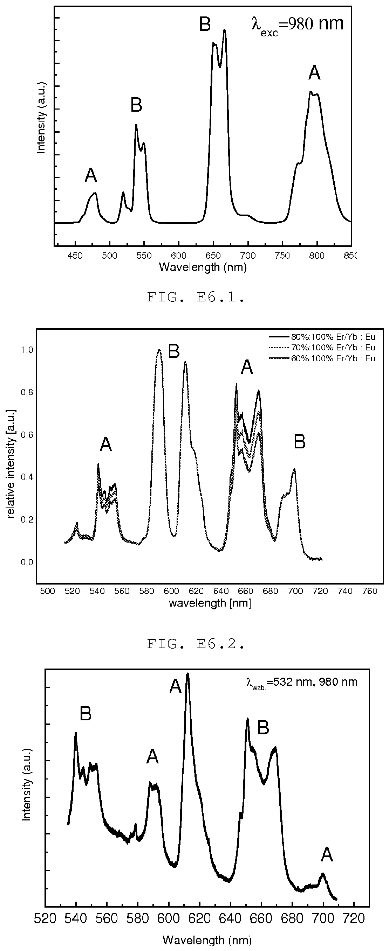

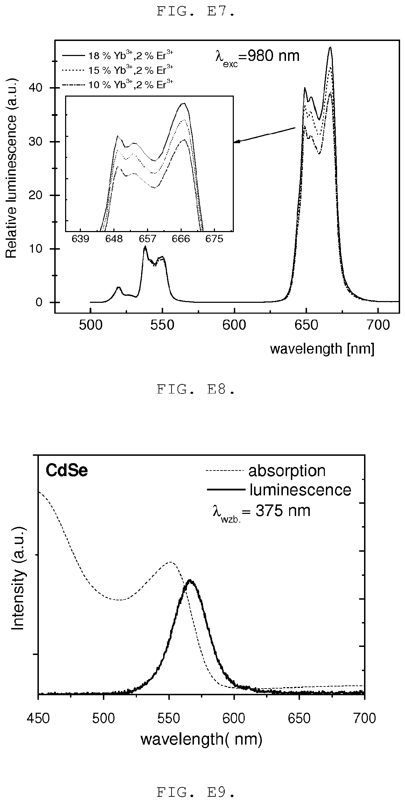

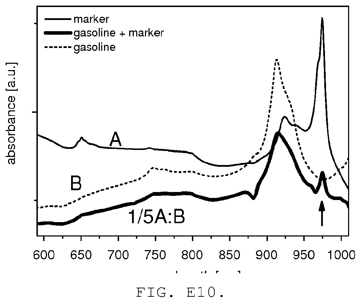

The figure E6.2. shows a combination of nanoluminophores (doped with Er³⁺: Yb³⁺ and Eu³⁺ respectively) forming various nanotags depending on the relative concentration of nanoluminophores. Presented nanomarker required double excitation in the IR and UV/Vis range respectively for Yb³⁺: Er³⁺ and Eu³⁺. Encoding scheme using mixture of different nanoluminophores was shown in Figure 1.

Due to the preceding calibration step, the relative intensities between the A and B emission bands allowed to evaluate the relative amounts of the two nanoluminophores mixed together to form the nanotags. Two nanoluminophores allowed preparing around 10 unique optical codes. Increasing the amount of nanoluminophores mixed, increased the amount of unique optical codes, as described in the *Explanation of the basic idea* section. The advantage of the presented approach is self-normalization, thus independently on the properties of the marked objects, which may get dirty or old, the optical code may be easily read.

### Example 7

The luminescence spectrum of a nanotag consisting of two nanoluminophores. Each of the nanoluminophores was a nanocrystallite containing optically active ions. The nanomarker consisted of a mixture of two nanoluminophores: the one doped with 5% Eu³⁺ and the one doped with 2% Er³⁺, 20% Yb³⁺ in the volume concentration ratio 1:1 (fig E7).

### Example 8

Impact of relative concentration of active ions (Yb and Er) on the luminescence intensity ratio of the nanoluminophores (fig. E8).

### Example 9

Absorption and luminescence spectrum of a nanotag consisting of CdSe quantum dots dissolved in chloroform. Spectral properties of the quantum dots, i.e. wavelength corresponding to the emission maximum could be modified and controlled during the synthesis by resizing nanokrystalitow (fig. E10).

### Example 10

An example of using nanotags for the marking of liquids (petrol). Absorption spectrum of the liquid mixture of gasoline and the nanomarker was a mixture of the absorption spectra of each individual component. The features characteristic for the nanotag were observed at 975nm (fig. E10).

### Example 11

Example of a metod of quantitative characterisation of luminescent nanomarkers. A method of calculation of emission vectors. The properties of a given set of nanotags is established by measuring the luminescence intensities/spectra of individual luminophores and a total luminescence spectra of the set of N phosphors used. Favourably properties of the set of marking phosphors is described by a unit vector [A₁,A₂,...,A_{N}] where Aᵢ = Sᵢ/ ∑ⱼ₌₁,...,_{N}Sⱼ is the integrated area of a given luminescence band Sᵢ and normalized to total integrated luminescence of all the nanoluminophores j=1..N (tj. A₁+A₂+....+A_{N}=1). The intensity of each of the luminescence bands is characterised by its intensity measured as the integral area of the band or may be characterised by measuring the height of the peak intensity in relation to the background signal. The present invention exploits luminescence spectra of the nanotags to detect inherent spectral properties and identify the composition nanotags. The nanotags are excited homogeneously with visible radiation or infra-red radiation (e.g. light laser) to observe converted radiation (e.g. due to up-conversion). The intensity of luminescence of the nanotags does not dependent on the contents of other fluorescent admixtures. The detection by using the proposed invention relies only on the relative concentration of individual nanoluminophores. A combination of *N* phosphors used, each of which contains at least one band of intensity *M* allows to obtain K = M^{N}-1 unique unit vectors. For example 3 luminescence bands coming from 3 nanoluminophores of luminescence intensities of 10 units gives 10³-1 = 999 different vectors, each of which is associated with the specified information (spectral code). If one extends the set to 5 nanoluminophores, the total number of available unit vectors reaches 100,000.

## Claims

1. Use of a marker for protecting valuable liquid and solid state materials against unauthorized substitution with second-hand or forged objects, comprising an organic or nonorganic liquid solvent as a dispersion medium, and a surface active substance on a nanomarker, **characterised in that** the nanomarker is a homogeneous mixture of two or more different nanoluminophors, wherein nanocrystallites of sizes between a few and a few tens of nanometers are used as the nanoluminophors and they are chosen from
- metals exhibiting plasmonic bands chosen from Au, Ag, Pt, Rh, Re, Pd, Cu,
- nanocrystalline metal oxides -A₂O₃, granates-A₃B₅O₁₂, perovskites-ABO₃, spinels-AB₂O₄ or
- stoichiometric compounds chosen from fluorides and oxychlorides,
doped with lanthanides or transitional metals, with large concentrations of optically active ions.

2. The use of claim 1, wherein the nanomarker comprises lanthanide ions chosen from Eu³⁺, Tb³⁺, Ce³⁺, Tm³⁺, Nd³⁺, Yb³⁺:Tm³⁺, Er³⁺, Er³⁺:Yb³⁺ with molar concentration from 0 to 100%.

3. The use of claim 1 or 2, wherein the dispersion medium is chosen from chloroform, toluene, benzene, hexane and water.

4. The use of any of claims 1 to 3, for protection of a valuable liquid chosen from fuel, oil or ink.

5. The use of any of claims 1 to 3, for protection of valuable solid state materials chosen from paper such as banknotes, documents, certificates; plastics such as printer cartridges; a metal/alloy such as coins; or a mechanical part such as a car engine part.

## Patentansprüche

1. Einsatz eines Markers zum Schutz wertvoller flüssiger und fester Materialien gegen unbefugte Ersetzung durch gebrauchte oder geschmiedete Gegenstände, umfassend ein organisches oder anorganisches flüssiges Lösungsmittel als Dispersionsmedium und eine oberflächenaktive Substanz auf einem Nanomarker, **dadurch gekennzeichnet, dass** der Nanomarker eine homogene Mischung aus zwei oder mehreren verschiedenen Nanoluminophoren ist, wobei als Nanoluminophoren Nanokristallite mit Größen zwischen einigen und einigen Dutzenden von Nanometern verwendet werden und sie ausgewählt sind aus
- Metallen, die plasmonische Bänder aufweisen, ausgewählt aus Au, Ag, Pt, Rh, Re, Pd, Cu,
- nanokristallinen Metalloxiden -A₂O₃, Granaten-A₃B₅O₁₂, Perowskites-ABO₃, Spinellen-AB₂O₄ oder
- stöchiometrische Verbindungen, ausgewählt aus Fluoriden und Chloroxiden,
dotiert mit Lanthaniden oder Übergangsmetallen, mit hohen Konzentrationen an optisch aktiven Ionen.

2. Einsatz nach Anspruch 1, worin der Nanomarker Lanthanoidionen umfasst, ausgewählt aus Eu³⁺, Tb³⁺, Ce³⁺, Tm³⁺, Nd³⁺, Yb³⁺:Tm³⁺, Er³⁺, Er³⁺, Er³⁺:Yb³⁺ mit einer molaren Konzentration von 0 bis 100%.

3. Einsatz nach Anspruch 1 oder 2, worin das Dispersionsmedium ausgewählt ist aus Chloroform, Toluol, Benzol, Hexan und Wasser.

4. Einsatz nach einem der Ansprüche 1 bis 3 zum Schutz einer wertvollen Flüssigkeit, ausgewählt aus Kraftstoff, Öl oder Tinte.

5. Einsatz nach einem der Ansprüche 1 bis 3 zum Schutz von wertvollen Festkörpermaterialien, ausgewählt aus Papier, wie Banknoten, Dokumente, Zertifikate; Kunststoffe wie Druckerkartuschen; Metall/Legierung wie Münzen; oder eines mechanischen Teils wie ein Kraftfahrzeugmotorteil.

## Revendications

1. Utilisation d'un marqueur pour protéger les matériaux précieux à l'état liquide et solide contre la substitution non autorisée par des objets usagés ou forgés, comprenant un solvant liquide organique ou non organique en tant que milieu de dispersion, et une substance active de surface sur un nanomarqueur, **caractérisée en ce que** le nanomarqueur est un mélange homogène de deux ou plusieurs nanoluminophores différents, dans laquelle des nanocristallites de tailles comprises entre quelques et quelques dizaines de nanomètres sont utilisés comme nanoluminophores et ils sont choisis parmi
- les métaux présentant des bandes plasmoniques choisis parmi Au, Ag, Pt, Rh, Re, Pd, Cu,
- oxydes métalliques nanocristallins -A₂O₃, granates-A₃B₅O₁₂, pérovskites-ABO₃, spinelles-AB₂O₄ ou
- composés stoechiométriques choisis parmi les fluorures et les oxychlorures,
dopés avec des lanthanides ou des métaux de transition, avec de grandes concentrations d'ions optiquement actifs.

2. Utilisation selon la revendication 1, dans laquelle le nanomarqueur comprend des ions lanthanides choisis parmi Eu³⁺, Tb³⁺, Ce³⁺, Tm³⁺, Nd³⁺, Yb³⁺:Tm³⁺, Er³⁺, Er³⁺:Yb³⁺ avec une concentration molaire de 0 à 100%.

3. Utilisation selon la revendication 1 ou 2, dans laquelle le milieu de dispersion est choisi parmi le chloroforme, le toluène, le benzène, l'hexane et l'eau.

4. Utilisation selon l'une quelconque des revendications 1 à 3, pour la protection d'un liquide précieux choisi parmi le carburant, l'huile ou l'encre.

5. Utilisation selon l'une quelconque des revendications 1 à 3, pour la protection de matériaux précieux à l'état solide choisis parmi le papier tel que des billets de banque, des documents, des certificats; les plastiques tels que des cartouches d'imprimante; un métal / alliage tel que des pièces de monnaie; ou une pièce mécanique telle qu'une pièce de moteur de voiture.
